# EUROPEAN PATENT APPLICATION

(11) **EP 4 832 325 A1**
(43) Date of publication of application: **28.10.2026**
(21) Application number: 26174474.2
(22) Date of filing: 24.04.2026
(51) Int. Cl.: H02M 1/12, H02M 1/00, H02M 7/5387

(54) **HARMONIC CURRENT SUPPRESSION SCHEMES FOR A POWER CONVERTER**

(30) Priority: 25.04.2025 US 202563794465 P
(71) Applicant: Eaton Intelligent Power Limited, Dublin 4, D04 Y0C2 (IE)
(72) Inventor: ABDELBAQI, Omar, Dublin, D04 Y0C2 (IE)
(74) Representative: Derry, Paul Stefan

(57) **Abstract**

Harmonic current suppression schemes for of a power converter is provided. An output current of the power converter is received. Harmonic currents are extracted from the output current. The harmonic currents are converted to a harmonic current rotating frame for a harmonic frequency that is associated with a selected harmonic order. An error signal is generated from the harmonic current rotating frame using a harmonic regulator to suppress a harmonic current associated with the selected harmonic order. The error signal is provided to a Pulse Width Modulation (PWM) controller. The error signal is combined with a main switch control signal to generate a combined switch control signal. The PWM controller adjusts a switching sequence of one or more switches of the power converter based on the combined switch control signal to suppress the harmonic current associated with the selected harmonic order.

## Description

### Related Application

This application claims the benefit of U.S. Provisional Application No. 63/794,465 filed April 25, 2025, which is incorporated herein by reference.

### Technical Field

The present disclosure relates generally to a power converter, and more particularly to harmonic current suppression scheme for a power converter.

### Background

A power converter is used to convert electric power from one form to another, for example, from Direct Current (DC) power to Alternating Current (AC) power or vice versa. Such power converters naturally generate harmonic currents due to a switching behavior of its switches or a nonlinear load associated with the power converter. Harmonic currents may lead to power quality issues, electromagnetic interference, increased losses, distorted voltage/current waveforms, etc.

### Brief Description of the Drawings

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
FIG. 1 illustrates an operating environment for harmonic current suppression schemes .
FIG. 2 illustrates a harmonic current suppression system for suppressing a harmonic current.
FIG. 3 illustrates a process for suppressing a harmonic current associated with a selected harmonic order.
FIG. 4 illustrates a flow diagram of a method for suppressing a harmonic current associated with a selected harmonic order.
FIG. 5 illustrates multiple harmonic currents suppression system for suppressing multiple harmonic currents.
FIG. 6 is a diagram of a computing device.

### Detailed Description

In the following Detailed Description, reference is made to the accompanying drawings, which form a part hereof, and in which is shown by way of illustration specific embodiments in which the invention may be practiced. In this regard, directional terminology, such as top, bottom, front, back, etc., is used with reference to the orientation of the Figure(s) being described. Because components of embodiments can be positioned in a number of different orientations, the directional terminology is used for purposes of illustration and is in no way limiting. It is to be understood that other embodiments may be utilized and structural or logical changes may be made without departing from the scope of the present invention. The following detailed description, therefore, is not to be taken in a limiting sense.

Embodiments of the disclosure provide harmonic current suppression systems and methods. The disclosed systems and methods may be employed to suppress or eliminate a harmonic current of a selected order or multiple harmonic currents corresponding to multiple selected orders using a harmonic regulator and a Pulse Width Modulation (PWM) controller. In one example, and as described in greater detail in the following sections of the disclosure, a harmonic current of a selected harmonic order is detected and forced to or suppressed to zero by injecting an additional voltage component to a main switch control signal of a PWM controller.

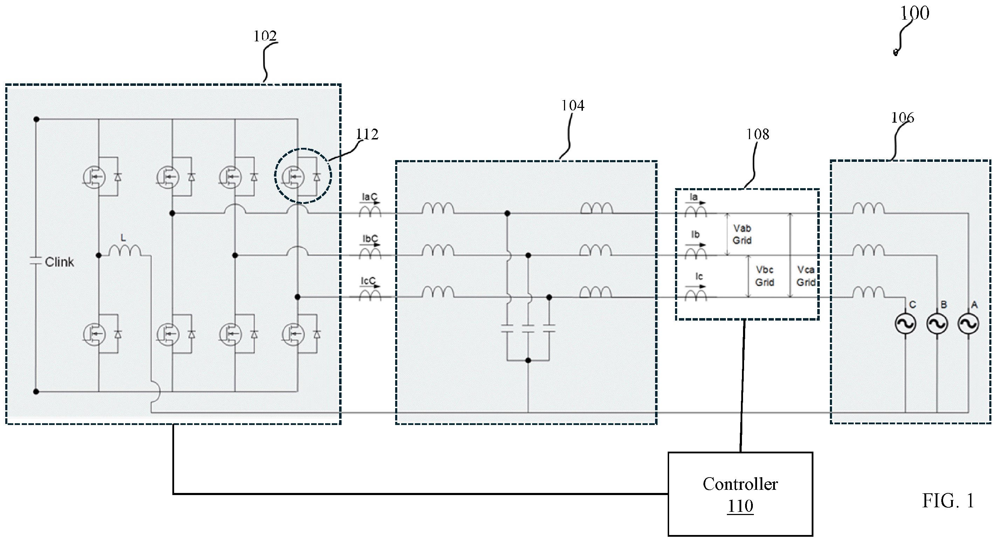

FIG. 1 illustrates an operating environment 100 for harmonic current suppression schemes for power converters. As shown in FIG. 1, operating environment 100 includes a power converter 102, a filter 104, and an Alternating Current (AC) source 106. Operating environment 100 may further include a sensor 108 and a controller 110. In some examples, filter 104, sensor 108, and controller 110 may be part of power converter 102.

Power converter 102 is a device that changes the form of electrical power. For example, power converter 102 may change AC power from AC source 106 to Direct Current (DC) power (also referred to as a rectifier). AC source 106 may be a transformer connected to an electrical grid or a generator. The converted DC power may be supplied to a device or a load, for example, a motor, a battery, etc. In some examples, power converter 102 may change DC power to AC power (also referred to as an inverter). Other types of power converter 102 may include a DC-to-DC converter and an AC-to-AC converter.

Power converter 102 uses two or more semiconductor switches 112 to change the form of the electrical power. For example, a rectifier uses PWM to convert AC power into DC power. Controller 110 may dictate when and which of one or more semiconductor switches 112 are activated or switched ON and OFF (also referred to as a switching sequence) to generate the DC output from AC source 106. A duty cycle (or an ON time) of semiconductor switches is varied to achieve a desired voltage.

Semiconductor switches 112 may include Metal Oxide Semiconductor Field Effect Transistors (MOSFETs), Insulated gate Bipolar Transistors (IGBTs), etc. Sensor 108 may sense or measure a voltage and a current an output of power converter 102 and provide the measured values to controller 110. Controller 110 may adjust the switching sequence of semiconductor switches 112 to control or adjust the voltage and the current at the output of power converter 102.

Filter 104 is used to smooth the pulsating DC output and reduce ripples. That is, filter 104 provides a more stable continuous DC voltage, minimizes unwanted AC components, improves a power quality, and reduces noise. Filter 104 is shown to be an LCL (that is, inductor, capacitor, inductor) filter, however, other types of filters for example, LC filter, capacitor filter, inductor filter, etc. may be used to smooth the pulsating DC output.

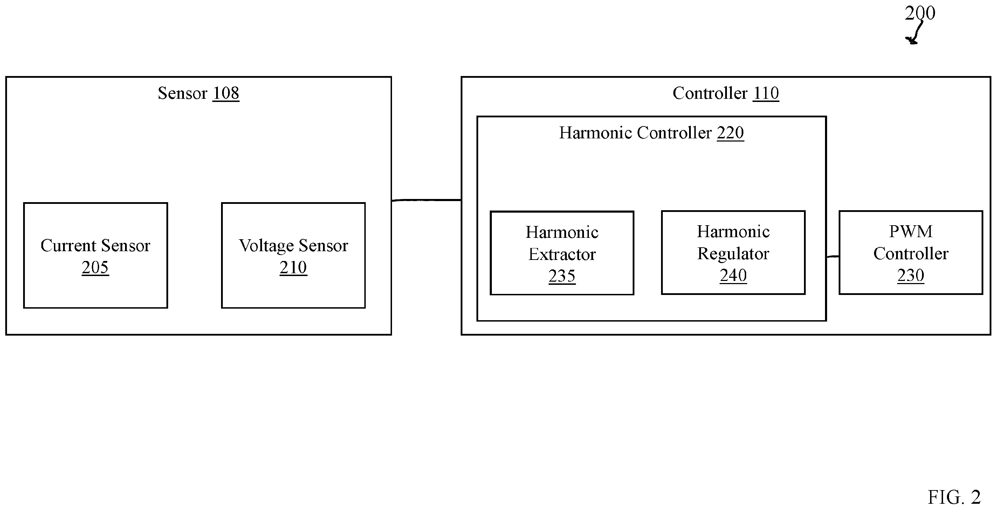

FIG. 2 illustrates a harmonic current suppression system 200 for suppressing harmonic currents, for example, of power converter 102 of operating environment 100. That is, harmonic current suppression system 200 may suppress or cancel one or more harmonic currents generated by power converter 102. Although harmonic current suppression system 200 is being discussed with respect to power converter 102, it may be used with any device that includes semiconductor switches.

Harmonic current suppression system 200 may include sensor 108 and controller 110. Sensor 108 may include a current sensor 205 and a voltage sensor 210. Current sensor 205 may sense a current at an output of power converter 102 (also referred to as an output current). In some examples, current sensor 205 may sense output currents in each phase of power converter 102. Voltage sensor 210 may sense a voltage at the output of power converter 102 (also referred to as an output voltage). In some examples, voltage sensor 210 may sense output voltage for each phase of power converter 102.

Controller 110 may include a harmonic controller 220 and a PWM controller 230. Harmonic controller 220 may include a harmonic extractor 235 and a harmonic regulator 240. Harmonic controller 220 may receive the output voltage and the output current from sensor 108, that is, from current sensor 205 and voltage sensor 210 respectively. Harmonic extractor 235 may then extract harmonic currents from the output current. Harmonic regulator 240 may generate an error signal or a control signal to suppress a harmonic current associated with a selected harmonic order. Harmonic regulator 240 may provide the error signal to PWM controller 230. PWM controller 230 may alter or adjust the switching sequence of one or more of semiconductor switches 112 of power converter 102 based on the error signal. Adjustment of the switching sequence leads to suppression or cancellation of the harmonic current associated with the selected harmonic order. A process and a method of suppressing harmonic currents is described in more detail in the following sections of the disclosure.

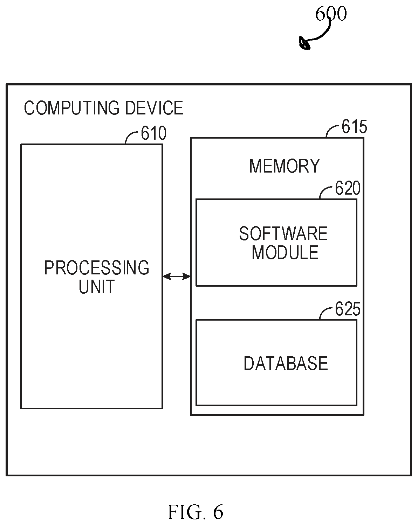

The elements described above of harmonic suppression system 200 (e.g., sensor 108, controller 110, current sensor 205, voltage sensor 210, harmonic controller 220, and PWM controller 230) may be practiced in hardware and/or in software (including firmware, resident software, micro-code, etc.) or in any other circuits or systems. The elements of harmonic suppression system 200 may be practiced in electrical circuits comprising discrete electronic elements, packaged or integrated electronic chips containing logic gates, a circuit utilizing a microprocessor, or on a single chip containing electronic elements or microprocessors. Furthermore, the elements of harmonic suppression system 200 may also be practiced using other technologies capable of performing logical operations such as, for example, AND, OR, and NOT, including but not limited to, mechanical, optical, fluidic, and quantum technologies. As described in greater detail below with respect to FIG. 6, the elements of harmonic suppression system 200 may be practiced in a computing device 600.

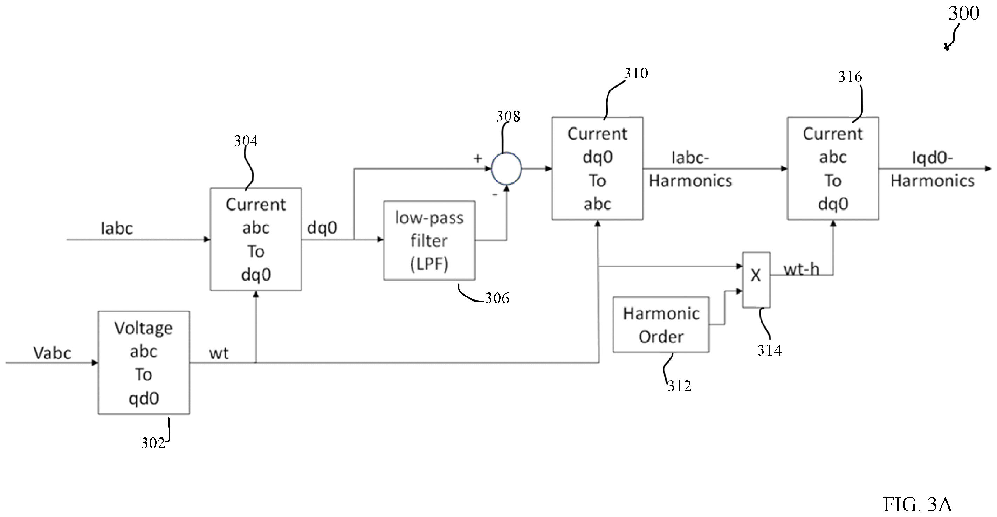

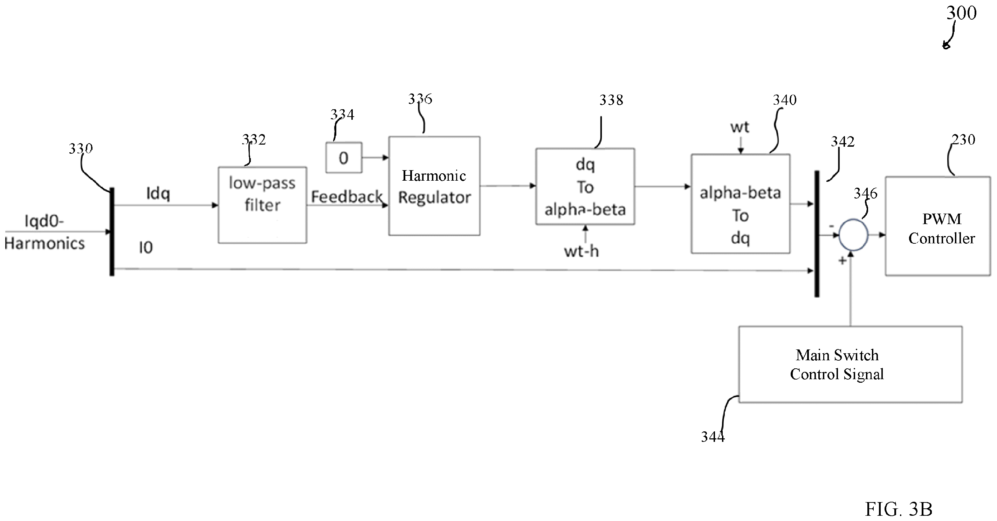

FIGS. 3A and 3B illustrate a process 300 for suppressing a harmonic current associated with a selected harmonic order. Process 300 may be implemented by harmonic current suppression system 200, and more specifically, harmonic controller 220 described above with respect to FIG. 2. Although process 300 for suppressing the harmonic current associated with a selected harmonic order is being discussed with respect to power converter 102, it may be used with any device that includes semiconductor switches.

As shown in Fig. 3A, at stage 302 of process 300, the output voltage is transformed or converted to a rotating frame. For example, harmonic controller 220 receives the output voltage of power converter 102 from voltage sensor 210. Voltage sensor 210 may provide the output voltage in a stationary frame (also referred to as Vabc). Harmonic controller 220 converts the output voltage from the stationary frame to the rotating frame (also referred to as Vdqo). In addition, a fundamental current angle (also referred to as wt) is derived from the output voltage.

At stage 304 of process 300, the output current is transformed or converted to a rotating frame. For example, harmonic controller 220 receives the output current of power converter 102 from current sensor 205. Current sensor 205 may provide the output current in a stationary frame (also referred to as Iabc). Harmonic controller 220 converts the output current from the stationary frame to the rotating frame (also referred to as Idqo) using the fundamental current angle (that is, wt). This results in converting a fundamental component of the output current to an output current rotating frame or an output current dq value.

At stage 306 of process 300, the output current dq value (or the output current rotating frame) is then filtered to extract fundamental current from the output current. For example, the output current dq value is fed to a first low pass filter that allows an output current dq value corresponding to the fundamental current angle to pass through. The first low pass filter filters out or blocks dq values corresponding to harmonic currents.

At stage 308 of process 300, the output of the first low pass filter is combined with or subtracted from the output current dq value. Subtracting the output of the first low pass filter from the output current dq value results in an output that includes dq values corresponding to the harmonic currents of the output current, that is, harmonic currents dq value.

At stage 310 of process 300, the harmonic currents dq value is transformed to or converted to a stationary frame (that is, harmonic currents stationary frame). The harmonic currents dq value is transformed to or converted to the harmonic currents stationary frame using the fundamental current angle (that is, wt). This results in obtaining harmonic currents rotating frame at the fundamental current angle.

At stage 312 of process 300, a harmonic order is selected. In one example, the harmonic order can be a numerical value, for example, one or more of 3^{rd}, 5^{th} 7^{th} 11^{th}, 13^{th}, etc. The harmonic order is selected to suppress or cancel a harmonic current associated with the selected harmonic order.

At stage 314 of process 300, the selected harmonic order is combined with or multiplied with the fundamental current angle. Multiplying the selected harmonic order with the fundamental current angle provides the harmonic current angle (also referred to as wt-h) corresponding to the selected harmonic order.

At stage 316 of process 300, the harmonic current stationary frame at the fundamental current angle is transformed or converted to a rotating frame (also referred to as a harmonic current stationary frame of harmonic order) using the harmonic current angle (that is, wt-h) of the selected harmonic order. The harmonic current angle (that is, wt-h) of the selected harmonic order is received from stage 314 of process 300.

At stage 330 of process 300, the harmonic current stationary frame of harmonic order is decomposed into a first component (also referred to as an Idq component) and a second component (also referred to as an I0 component). In one example, the harmonic current stationary frame of harmonic order may be decomposed using a de-multiplexer. In an ideal situation, a value of the I0 component is approximately equal to zero. In some examples, the Idq component may include an Id component and an Iq component. In an ideal situation, a value of the Iq component may also be equal to zero.

At stage 332 of process 300, the first component (that is, Idq) of the harmonic current stationary frame of harmonic order is filtered using a second low pass filter. Filtering the first component (that is, the Idq component) may remove non-selected harmonic currents values from the first component. The output from the second low pass filter is provided as a first input to harmonic regulator 240.

At stage 334 of process 300, a second input is provided to harmonic regulator 240. In one example, the second input is a predetermined value, for example, zero.

At stage 336 of process 300, harmonic regulator 240 produces an error signal based on comparing the first input (that is, the first component (that is, the Idq component) of the harmonic current stationary frame of selected harmonic order) and the second input (that is, zero). If the first component (that is, the Idq component) of the harmonic current stationary frame of selected harmonic order is not zero, then the error signal of harmonic regulator 240 may be a non-zero value.

At stage 338 of process 300, the error signal from harmonic regulator 240 is converted to a stationary frame at the selected harmonic current angle (that is, wt-h) (also referred to as an error signal at selected harmonic order).

At stage 340 of process 300, the error signal at selected harmonic order is converted to transformed to a stationary frame at the fundamental frequency (that is, wt) (also referred to as an error signal stationary frame).

At stage 342 of process 300, the error signal stationary frame is combined with the second component (that is, the I0 component) of the harmonic current stationary frame of selected harmonic order. At stage 344 of process 300, a main switch control signal is received. At stage 346 of process 300, the error signal is combined with the main switch control signal to generate a combined switch control signal. The combined switch control signal is provided to PWM controller 230. PWM controller 240 may adjust a switching sequence of one or more semiconductor switches 112 of power converter 102 based on the combined switch control signal. This results in the harmonic current associated with the selected harmonic order to be suppressed to zero or canceled.

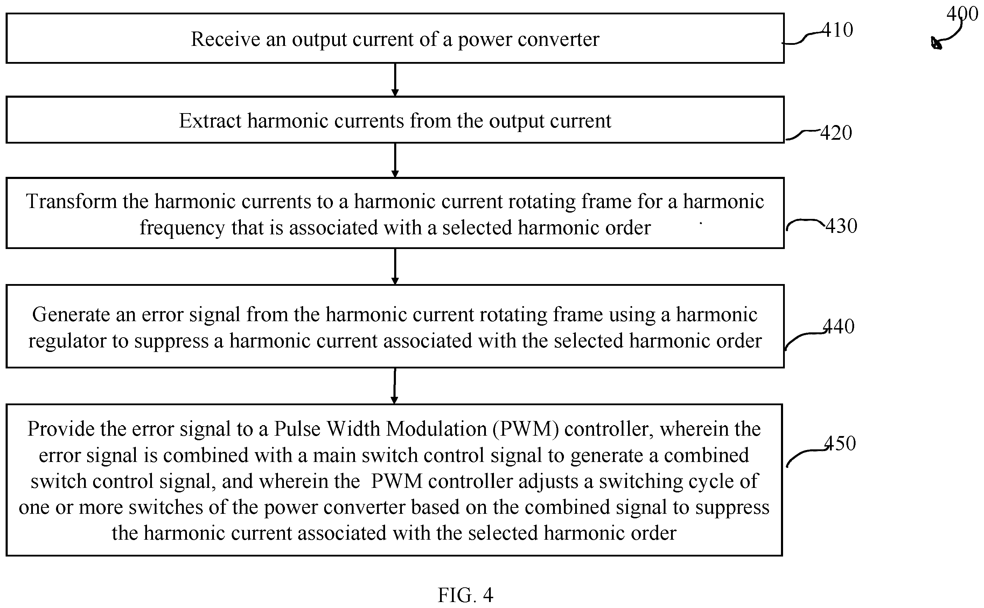

FIG. 4 is a flow diagram of a method 500 for suppressing a harmonic current associated with a selected harmonic order. Method 400 may be implemented using a controller 110 as described in more detail above with respect to FIGS. 1 and 2. Ways to implement the stages of method 400 will be described in greater detail below. Although method 400 for suppressing the harmonic current associated with a selected harmonic order is being discussed with respect to power converter 102, it may be used with any device that includes semiconductor switches

At stage 410 of method 400, the output current of power converter 102 is received. As discussed above, the output current of power converter 102 is received by harmonic controller 220 from current sensor 205. The output current is received in a stationary frame and may include both a fundamental current and harmonic currents.

At stage 420 of method 400, the harmonic currents are extracted from the output current. Harmonic extractor 235 of harmonic controller 220 may extract or filter the harmonic currents from the output current. For example, the output current is transferred form the stationary frame to a rotating frame using the fundamental current angle. The fundamental current angle may be an angle associated with a fundamental frequency (for example, 60Hz). This results in converting only the fundamental component of the output current to the dq value. The dq value of the output current is then feed to a first low pass filter and the output of the first low pass filter is subtracted from the output current dq value. This results in only obtaining the dq value for the harmonic currents.

At stage 430 of method 400, the harmonic currents are transformed to a rotating frame harmonic current for a harmonic frequency that is associated with a selected harmonic order. Harmonic extractor 235 of harmonic controller 220 can transform or convert the harmonic currents to the rotating frame harmonic current for the harmonic frequency of the selected harmonic order. For example, a harmonic order is selected. The fundamental current angle is multiplied with the selected harmonic order to obtain a selected harmonic order angle (that is, wt-h). The dq value for the harmonic currents is transformed to a rotating frame using the selected harmonic angle (that is, wt-h).

At stage 440 of method 400, an error signal is generated from the harmonic currents rotating frame using harmonic regulator 240. For example, a first component (that is, the dq component) of the harmonic currents rotating frame is filtered using a second low pass filter. The output of the second low pass filter is provided to harmonic regulator 240. Harmonic regulator 240 compares the output of the second low pass filter with a predetermined value (that is, zero) and generates the error signal based on the comparison. The error signal may indicate a level of the harmonic current associated with the selected harmonic order is zero.

At stage 440 of method 400, the error signal is provided to PWM controller 230. Error signal is combined with a main switch control signal of power converter 102 to generate a combined switch control signal. PWM controller 230 adjust the switching sequence of one or more semiconductor switches 112 of power converter 102 based on the combined switch control signal to suppress the harmonic current corresponding to the selected harmonic order from the output current of power converter 102.

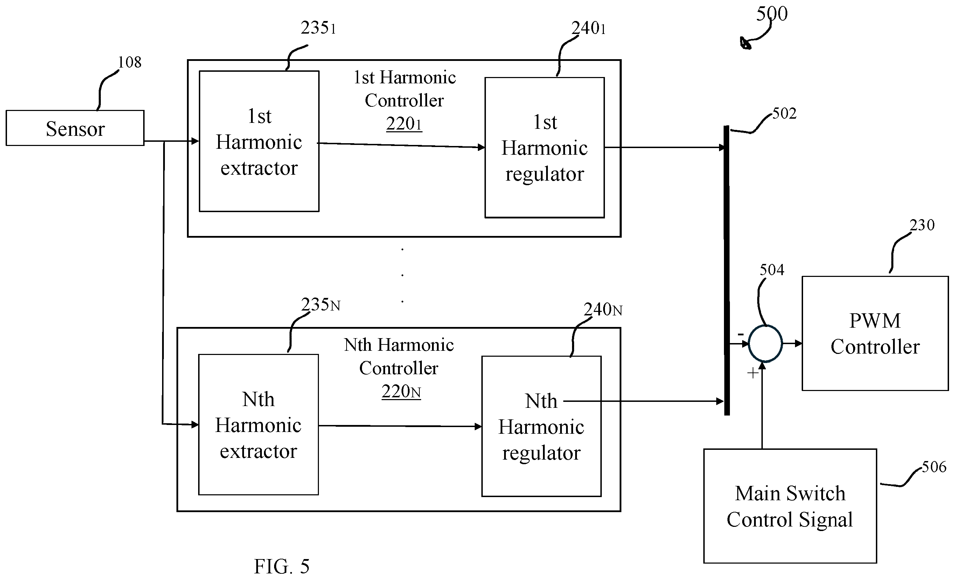

In example implementations, harmonic currents associated with multiple harmonic orders may be suppressed simultaneously. FIG. 5 illustrates an example multiple harmonic current suppression system 500. As shown in Fig. 5, multiple harmonic current suppression system 500 includes a plurality of harmonic controllers, for example, a first harmonic controller 220₁, ..., and an Nth harmonic controller 220_{N}. Each of the plurality of harmonic controllers may include an associated harmonic extractor and an associated harmonic regulator. For example, first harmonic controller 220₁ includes a first harmonic extractor 235₁ and a first harmonic regulator 220₁. Similarly, Nth harmonic controller 220_{N} includes a Nth harmonic extractor 235_{N} and an Nth harmonic regulator 220_{N}. Each of the plurality of harmonics controllers of harmonic current suppression system 500 generates an error signal to suppress a harmonic current corresponding to a selected harmonic order. For example, first harmonic controller 220₁ may generate a first error signal to suppress a first harmonic current associated with a first selected harmonic order, ..., and Nth harmonic controller 220_{N} may generate an Nth error signal to suppress an Nth harmonic current associated with an Nth selected harmonic order. The error signals from the plurality of harmonics controllers are combined at combiner 502. In some examples, combiner 502 is a multiplexer. The combined error signals are combined with main switch control signal 506 at combiner 504 to generate a combined switch control signal. The combined switch control signal is then provided to PWM controller 230. This results in suppressing multiple harmonic currents in a single cycle.

FIG. 6 shows computing device 600. As shown in FIG. 6, computing device 600 may include a processing unit 610 and a memory unit 615. Memory unit 615 may include a software module 620 and a database 625. While executing on processing unit 610, software module 620 may perform, for example, process 300 of suppressing harmonic currents of power converter 102 and method 400 of suppressing harmonic currents of power converter 102 as described above with respect to FIG. 2 and FIG. 3 respectively.

Computing device 600, for example, may provide an operating environment for sensor 108, controller 110, current sensor 205, voltage sensor 210, harmonic controller 220, PWM controller 230, combiner 502, and combiner 504. Sensor 108, controller 110, current sensor 205, voltage sensor 210, harmonic controller 220, PWM controller 230, combiner 502, and combiner 504 may operate in other environments and are not limited to computing device 600.

Computing device 600 may be implemented using a Wi-Fi access point, a cellular base station, a tablet device, a mobile device, a smart phone, a personal computer, a network computer, a mainframe, a router, a switch, a server cluster, a network relay device, or other similar microcomputer-based device. Computing device 600 may comprise any computer operating environment, such as hand-held devices, multiprocessor systems, microprocessor-based or programmable sender electronic devices, minicomputers, mainframe computers, and the like. Computing device 600 may also be practiced in distributed computing environments where tasks are performed by remote processing devices. The aforementioned systems and devices are examples and computing device 600 may comprise other systems or devices.

Embodiments of the disclosure, for example, may be implemented as a computer process (method), a computing system, or as an article of manufacture, such as a computer program product or computer readable media. The computer program product may be a computer storage media readable by a computer system and encoding a computer program of instructions for executing a computer process. The computer program product may also be a propagated signal on a carrier readable by a computing system and encoding a computer program of instructions for executing a computer process. Accordingly, the present disclosure may be embodied in hardware and/or in software (including firmware, resident software, micro-code, etc.). In other words, embodiments of the present disclosure may take the form of a computer program product on a computer-usable or computer-readable storage medium having computer-usable or computer-readable program code embodied in the medium for use by or in connection with an instruction execution system. A computer-usable or computer-readable medium may be any medium that can contain, store, communicate, propagate, or transport the program for use by or in connection with the instruction execution system, apparatus, or device.

The computer-usable or computer-readable medium may be, for example but not limited to, an electronic, magnetic, optical, electromagnetic, infrared, or semiconductor system, apparatus, device, or propagation medium. More specific computer-readable medium examples (a non-exhaustive list), the computer-readable medium may include the following: an electrical connection having one or more wires, a portable computer diskette, a random access memory (RAM), a read-only memory (ROM), an erasable programmable read-only memory (EPROM or Flash memory), an optical fiber, and a portable compact disc read-only memory (CD-ROM). Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory.

While certain embodiments of the disclosure have been described, other embodiments may exist. Furthermore, although embodiments of the present disclosure have been described as being associated with data stored in memory and other storage mediums, data can also be stored on or read from other types of computer-readable media, such as secondary storage devices, like hard disks, floppy disks, or a CD-ROM, a carrier wave from the Internet, or other forms of RAM or ROM. Further, the disclosed methods' stages may be modified in any manner, including by reordering stages and/or inserting or deleting stages, without departing from the disclosure.

Furthermore, embodiments of the disclosure may be practiced in an electrical circuit comprising discrete electronic elements, packaged or integrated electronic chips containing logic gates, a circuit utilizing a microprocessor, or on a single chip containing electronic elements or microprocessors. Embodiments of the disclosure may also be practiced using other technologies capable of performing logical operations such as, for example, AND, OR, and NOT, including but not limited to, mechanical, optical, fluidic, and quantum technologies. In addition, embodiments of the disclosure may be practiced within a general purpose computer or in any other circuits or systems.

Embodiments of the disclosure may be practiced via a system-on-a-chip (SOC) where elements may be integrated onto a single integrated circuit. Such an SOC device may include one or more processing units, graphics units, communications units, system virtualization units and various application functionality all of which may be integrated (or "burned") onto the chip substrate as a single integrated circuit. When operating via an SOC, the functionality described herein with respect to embodiments of the disclosure, may be performed via application-specific logic integrated with other components of computing device 600 on the single integrated circuit (chip).

Embodiments of the present disclosure, for example, are described above with reference to block diagrams and/or operational illustrations of methods, systems, and computer program products according to embodiments of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

While the specification includes examples, the disclosure's scope is indicated by the following claims. Furthermore, while the specification has been described in language specific to structural features and/or methodological acts, the claims are not limited to the features or acts described above. Rather, the specific features and acts described above are disclosed as example for embodiments of the disclosure.

## Claims

1. A method (400) of controlling harmonic current of a power converter (102), the method comprising:
receiving (410) an output current of a power converter (102);
extracting (420) harmonic currents from the output current;
converting (430) the harmonic currents to a harmonic current rotating frame for a harmonic current angle that is associated with a selected harmonic order;
generating (440) an error signal from the harmonic current rotating frame using a harmonic regulator (220) to suppress a harmonic current associated with the selected harmonic order; and
providing (450) the error signal to a Pulse Width Modulation (PWM) controller (230), wherein the error signal is combined with a main switch control signal to generate a combined switch control signal, and wherein the PWM controller (230) adjusts a switching sequence of one or more switches of the power converter (102) based on the combined switch control signal to suppress the harmonic current associated with the selected harmonic order.

2. The method (400) of claim 1, wherein extracting the harmonic currents from the output current comprises:
converting (304) the output current to a rotating frame line current using a fundamental current angle to generate an output current rotating frame;
filtering (306) the output current rotating frame using a first low pass filter; and
combining (308) an output from the first low pass filter with the output current rotating frame to extract the harmonic currents from the output current.

3. The method (400) of claim 2, wherein combining the output from the first low pass filter with the output current rotating frame comprises subtracting the output from the first low pass filter from the output current rotating frame to extract the harmonic currents.

4. The method (400) of any preceding claim, wherein converting the harmonic currents to the harmonic current rotating frame for the harmonic current angle that is associated with the selected harmonic order:
determining the harmonic current angle from the selected harmonic order; and
transforming the harmonic currents from a stationary frame to rotating frame at the harmonic current angle to generate the harmonic current rotating frame.

5. The method (400) of claim 4, wherein determining the harmonic current angle from the selected harmonic order comprises multiplying the selected harmonic order with a fundamental current angle to determine the harmonic current angle.

6. The method (400) of any preceding claim, wherein generating the error signal from the harmonic current rotating frame using the harmonic regulator (220) comprises:
comparing, by the harmonic regulator (220), the harmonic current rotating frame with a predetermined value; and
generating the error signal based on the comparison.

7. The method (400) of any preceding claim, further comprising:
transforming the error signal from a rotating frame to a stationary frame at the harmonic current angle to generate an error signal stationary frame; and
transforming the error signal stationary frame from the stationary frame to the rotating frame at a fundamental current angle.

8. The method (400) of any preceding claim, further comprising:
determining a fundamental current angle from an output voltage of the power converter (102).

9. A harmonic current suppression system (200) comprising:
a harmonic extractor (235) configured to:
receive an output current of a device,
extract harmonic currents from the output current, and
convert the harmonic currents to a harmonic current rotating frame for a harmonic current angle that is associated with a selected harmonic order;
a harmonic regulator (220) configured to generate an error signal from the harmonic current rotating frame to suppress a harmonic current associated with the selected harmonic order; and
a Pulse Width Modulation (PWM) controller (230) configured to:
receive the error signal, wherein the error signal is combined with a main switch control signal to generate a combined switch control signal, and
adjust a switching sequence of one or more switches of the device based on the combined switch control signal to suppress the harmonic current associated with the selected harmonic order.

10. The harmonic current suppression system (200) of claim 9, wherein the harmonic extractor (235) being configured to convert the harmonic currents to the harmonic current rotating frame for the harmonic current angle that is associated with the selected harmonic order comprises wherein the harmonic extractor (235) being configured to:
receive an output voltage of the device from a voltage sensor;
determine a fundamental current angle from the output voltage;
determine the harmonic current angle from the fundamental current angle and the selected harmonic order; and
convert the harmonic currents to the harmonic current rotating frame at the harmonic current angle.

11. The harmonic current suppression system (200) of claim 9 or claim 10, wherein the harmonic extractor (235) being configured to extract the harmonic currents from the output current comprises the harmonic extractor (235) being configured to:
convert the output current to a rotating frame line current using a fundamental current angle to generate an output current rotating frame;
filter the output current rotating frame using a first low pass filter; and
combine an output from the first low pass filter with the output current rotating frame to extract the harmonic currents from the output current.

12. The harmonic current suppression system (200) of claim 11, wherein the harmonic extractor (235) being configured to combine the output from the first low pass filter with the output current rotating frame comprises the harmonic extractor (235) being configured to subtract the output from the first low pass filter from the output current rotating frame to extract the harmonic currents.

13. The harmonic current suppression system (200) of any of claims 9 to 12, wherein the harmonic extractor (235) being configured to generate the error signal from the harmonic current rotating frame using the harmonic regulator (220) comprises the harmonic extractor (235) being configured to:
compare the harmonic current rotating frame with a predetermined value; and
generate the error signal based on the comparison.

14. A harmonic current suppression system (200) comprising:
a first harmonic controller comprising:
a first harmonic extractor (235) configured to convert harmonic currents of an output current of a device to a first harmonic current rotating frame for a first harmonic current angle that is associated with a first selected harmonic order, and
a first harmonic regulator (220₁) configured to generate a first error signal from the first harmonic current rotating frame to suppress a first harmonic current associated with the first selected harmonic order;
a second harmonic controller comprising:
a second harmonic extractor (235) configured to convert the harmonic currents to a second harmonic current rotating frame for a second harmonic current angle that is associated with a second selected harmonic order, and
a second harmonic regulator (220₂) configured to generate a second error signal from the second harmonic current rotating frame to suppress a second harmonic current associated with the second selected harmonic order; and
a combiner configured to:
combine the first error signal and the second error signal to generate a combined error signal,
combine the combined error signal with a main switch control signal to generate a combined switch control signal, and
provide the switch control signal to a Pulse Width Modulation (PWM) controller (230).

15. The harmonic current suppression system (200) of claim 14, wherein PWM controller (230) is configured to adjust a switching sequence of one or more switches of the device based on the combined switch control signal to suppress the harmonic current associated with the selected harmonic order.
